Europäisches Patentamt

European Patent Office

Office européen des brevets

(11) Publication number: **0 239 686**
**A1**

(12) **EUROPEAN PATENT APPLICATION**

(21) Application number: **86302021.0**

(22) Date of filing: **19.03.86**

(51) Int. Cl.⁴: **G11B 23/023 , A47F 1/04**

(43) Date of publication of application:
**07.10.87 Bulletin 87/41**

(84) Designated Contracting States:
**AT BE CH DE FR IT LI LU NL SE**

(71) Applicant: **QUILLGOLD MARKETING LIMITED.**
**Quillgold House West Stone Berry Hill**
**Industrial Estate**
**Droitwich Worcestershire WR9 9AS(GB)**

(72) Inventor: **Whitehurst, Reginald Richard**
**27 Greenway Drive**
**Sutton Coldfield West Midlands B73 6SE(GB)**

(74) Representative: **Spruce, George Philip et al**
**George Fuery & Co. Whitehall Chambers 23**
**Colmore Row**
**Birmingham B3 BL2(GB)**

(54) **Storage units.**

(57) Storage unit e.g. for "Compact" cassette tapes
(22) or other stackable articles being of substantially
identical shape comprises a channel shaped recep-
tacle (10) preferably inclined somewhat rearwardly,
the channel side walls including a series of length-
wise spaced arms (16) each terminating in a finger
(18) extending partway across the gap between the
side walls with uniform gaps (20) forming equally
spaced dispensing zones therebetween. A platform
(26) on which the stack rests in use can be selec-
tively raised and lowered by an actuating lever (40)
to bring alternate ones of the articles forming the
stack into selective alignment with the dispensing
zones so that any individual article can be withdrawn
leaving the remainder of the articles in the recepta-
cle.

Fig. 1 .

## STORAGE UNITS

This invention relates to the storage of stackable articles in a manner which permits one or more articles to be extracted from the stack at any height in the stack without disrupting vertical alignment of the remaining articles in the stack. The invention has particular application to the storage of cases containing magnetic tape cassettes but is capable of application to other articles which have faces permitting them to be located one on top of the other to form a stack.

When articles are stacked for storage purposes, extracting individual articles from different heights in the stack is problematic because of the frictional forces between the stacking faces of the vertically adjacent articles. Thus, withdrawal of a selected article from the stack tends to draw unwanted articles from the stack which makes extraction cumbersome and necessitates readjustment of the stack to maintain the remaining articles vertically aligned.

The object of the present invention is to provide an improved unit for storage of stackable articles in a manner facilitating removal of selected articles without disrupting the stack and without the user having to restrain displacement of the articles immediately above and below the selected article.

According to the invention there is provided a storage unit for a plurality of stackable articles of substantially identical shape, the storage unit comprising a receptacle in which the articles can be loaded to form a stack within the receptacle, the receptacle being provided with a series of dispensing zones which are spaced at substantially equal intervals lengthwise of the stack so as to be in registry with alternate ones of the articles forming the stack whereby any one of said registering articles can be withdrawn from the stack through the corresponding dispensing zone, means for preventing transverse withdrawal of the non-registering articles from the stack, and user-operable means for displacing the stack in its lengthwise direction to take one set of alternate articles out of registry with said zones and bring the remaining articles into registry with said zones and vice versa.

Preferably the receptacle is so adapted that, when placed on a horizontal surface, the stack is inclined at an angle to the horizontal and is supported by an inclined support surface or surfaces whereby, during loading of the receptacle, the articles tend to gravitate towards the support surface or surfaces and automatically form a tidy stack.

The dispensing zones are conveniently shaped to permit the user to grasp a selected article at its sides and pull it out of the stack.

To promote further understanding of the invention, one embodiment thereof will now be described by way of example only with reference to the accompanying drawings, in which:-

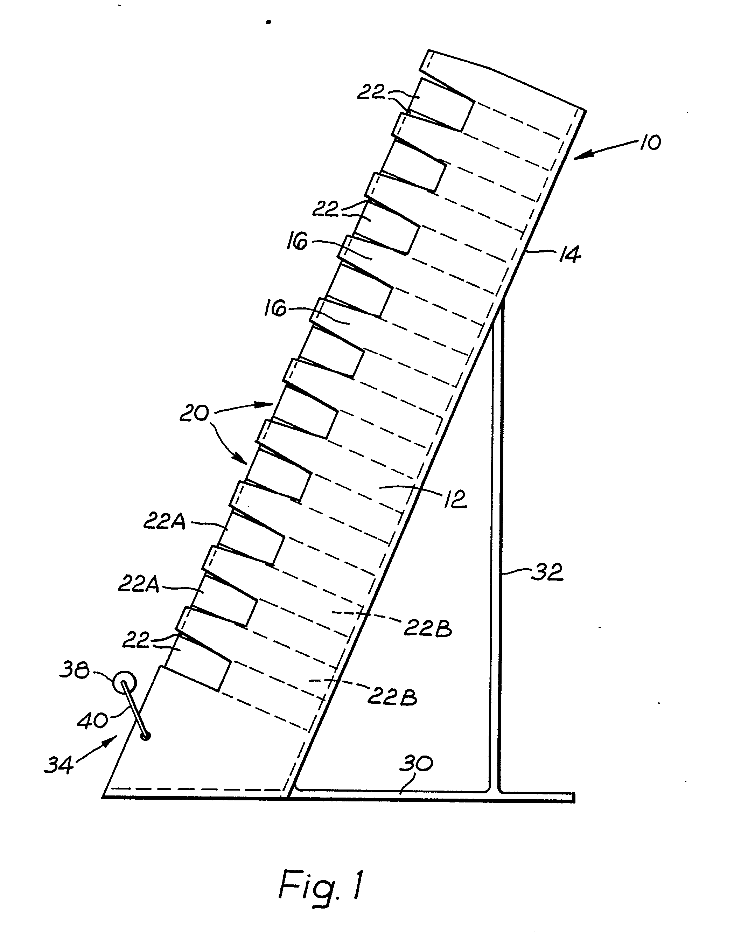

Figure 1 is a side view of a cassette case storage unit in accordance with the invention; and

Figure 2 is a fragmentary, enlarged view showing diagramatically, a stack-displacing means of the unit.

As shown, the storage unit comprises a receptacle 10 which is generally channel-shaped having a pair of side walls 12 and a base or rear wall 14. The side walls 12 are formed with a series of lengthwise spaced arms 16 each terminating in a finger 18 which extends partway across the gap between the side walls 12. Each arm 16 on one side is transversely aligned with respective arm on the opposite side. The fingers 18 need only extend a short distance across the width of the receptacle but, if desired, they may meet or even be integrally united with each other. However, for reasons that will become apparent, it is desirable that the fingers 18 should afford a viewing window, e.g. by leaving a viewing gap therebetween or by being provided with a transparent portion if the fingers on opposite sides are joined together.

Between each pair of vertically adjacent arms 16 there are gaps 20 which are transversely aligned to form a series of equally spaced dispensing zones. The cross sectional dimensions of the receptacle are determined by the articles to be stored. The illustrated embodiment is intended for the storage of the cases 22 of COMPACT magnetic tape cassettes (COMPACT is a registered Trade Mark) which, in general, are of substantially identical shape and size and are of regular parallelopiped shape with approximate dimensions of 110x70x17mm. Thus, the cross section of the receptable 10 will be slightly larger than 110x70mm so as to receive the cases as a snug sliding fit.

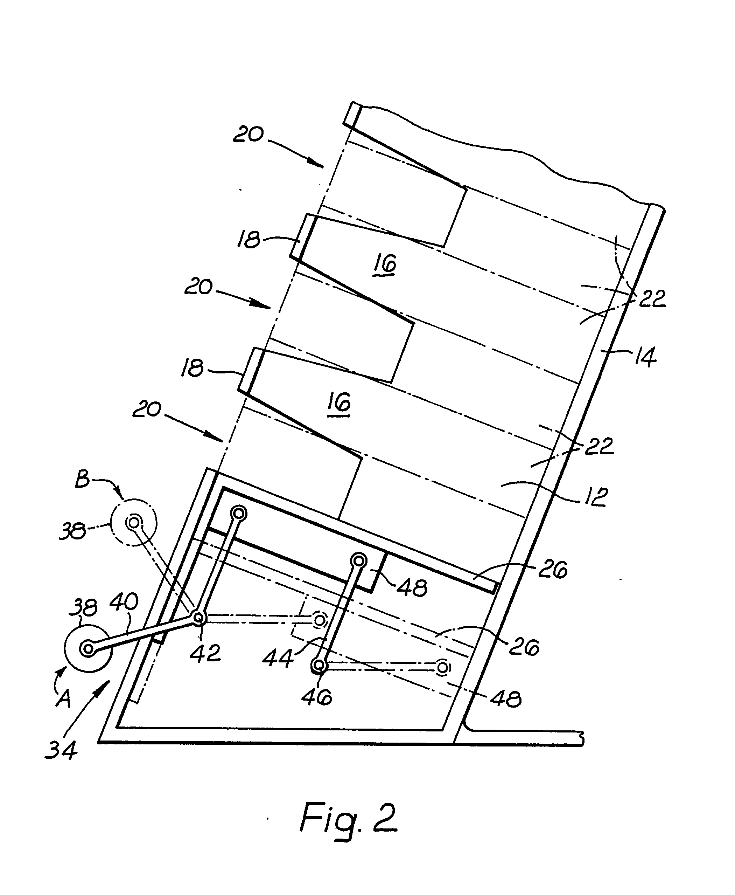

The top end of the receptacle 10 is open so that the cases 22 can be loaded from that end so as to form a stack. Additionally or alternatively, the cases 22 may be loaded into the receptacle via the gaps 20. The bottom end of the receptacle 10 is formed by a platform 26 which is adjustable up and down through an increment of about 17mm between the solid and outline position shown in Figure 2. When the platform 26 is in the upper position and the receptacle is loaded with cases 22, it will be noted that alternate ones of the cases, e.g. 22A, are in registry with the dispensing zones and can therefore be withdrawn from the stack through the opening along the front of the receptacle. The remaining cases, e.g. 22B, on the other hand are out of registry with the dispensing zones and are restrained from being withdrawn by the fingers 18. However, by moving the platform 26 to its lower position, it will be understood that the cases 22B can be brought into registry with the dispensing zones to permit their withdrawal while the cases 22A are then restrained from withdrawal.

In this way, any selected case can be brought into registry with a dispensing zone to allow it to be removed and, because the cases immediately above and below the selected cases are restrained by the fingers 18, extraction of the selected case will not draw the adjacent cases with it thereby avoiding disruption of the stack. On removal of the selected case, those above it will simply drop down the receptacle by the distance corresponding to the thickness of the extracted case.

To ensure that the stack forms tidily during loading and remains that way when the cases drop down on removal of a selected case, the receptacle 10 is mounted at an inclination which causes the cases to gravitate towards the rear wall 14. Thus, the receptacle is mounted on a flat base 30 and is supported by a strut 32.

Up and down movement of the platform 26 is effected by means of an actuator 34 including a parallelogrammic linkage 40, 44 operable by a handle 38. The link 40 is a double armed lever and is pivoted to the side walls of the receptacle at 42. The link 44 is pivoted to the side walls of the receptacle at 46 and both links 40,44 are pivoted to a block 48 which bears slidably against the underside of the platform 26. By virtue of the parallelogrammic arrangement, movement of the handle 38 between the two positions A and B (see Figure 2) serves to displace the platform up and down while maintaining its stacking face generally perpendicular to the longitudinal axis of the receptacle.

From the foregoing, it will be seen that the cases 22 can be stored as a stack without giving rise to the problems normally encountered when a selected item is to be withdrawn from the stack. Also, all of the items of the stack may be inspected at any time, either through the dispensing zones or through the viewing window or gap associated with the restraining fingers.

## Claims

1. A storage unit for a plurality of stackable articles of substantially identical shape comprising a receptacle in which the articles can be loaded to form a stack within the receptacle; characterised in that the receptacle (10) is provided with a series of dispensing zones (20) which are spaced at substantially equal intervals lengthwise of the stack so as to be in registry with alternate ones of the articles (22) forming the stack whereby any one of said registering articles can be withdrawn from the stack through the corresponding dispensing zone, in that means (18) are provided for preventing transverse withdrawal of the non-registering articles from the stack, and in that user-operable means (26) are provided for displacing the stack in its lengthwise direction to take one set of alternate articles out of registry with said zones and bring the remaining articles into registry with said zones and vice versa.

2. A unit as in Claim 1 characterised by a supporting base (30) on which the receptacle is mounted at an angle so that the stack is operatively inclined whereby the articles tend to gravitate towards a support surface (14) of the receptacle to assist their alignment into a tidy stack.

3. A unit as in claim 1 or 2 characterised in that the dispensing zones (20) are each shaped to permit a user to grasp a selected article at its sides and pull it from the stack.

4. A unit as in claim 1, 2 or 3 characterised in that the means (18) for preventing transverse withdrawal are formed to leave a substantial portion of the non-registering articles visible in use.

5. A unit as in claim 4 characterised in that said means for preventing transverse withdrawal include a series of arms (16) each terminating in a finger (18) which extends partway across a gap between side walls of the receptacle.

6. A unit as in claim 4 or 5 characterised in that said means for preventing transverse withdrawal (18) are formed at least in part from transparent material.

7. A unit as in any preceding claim characterised in that the user operable means for displacing the stack lengthwise includes a platform (26) on which the bottom of the stack rests in use and actuating means (40,48) for selective upward and downward displacement of the platform.

8. A unit as in claim 7 characterised in that the actuating means includes a parallelogrammic linkage (40,44).

9. A unit as in any preceding claim characterised by being dimensioned for the storage of "Compact" tape cassettes.

Fig. 1

Fig. 2

# EUROPEAN SEARCH REPORT

European Patent Office

Application number

EP 86 30 2021

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-1 418 144 (NUTT & CO.)  * Page 1, line 64 - page 2, line 91; figures * | 1,2,4,5,9 | G 11 B 23/023  A 47 F 1/04 |
| A | WO-A-8 601 328 (I.D.N.)  * Page 3, lines 1-22; figures * | 1,3 | |
| A | US-A-3 294 246 (I. OPPENHEIM)  * Column 3, lines 38-62; column 4, lines 43-58; claims; figures * | 1 | |
| A | FR-A-2 375 687 (RENT DESIGN)  * Claims; figures * | 1,2,9 | |
| A | DE-A-2 654 861 (P. FÜWESI)  * Claims; figures * | 1,2,9 | TECHNICAL FIELDS SEARCHED (Int. Cl.4) |
| A | US-A-4 387 810 (L.J. CROSSLEN)  * Column 3, line 19 - column 4, line 44; figures * | 1-5 | G 11 B  A 47 B  A 47 F  G 07 F |
| E | GB-A-2 169 490 (R.R. WHITEHURST)  * Whole document; figures * | 1-9 | |
| A | DE-A-3 204 998 (H. ENGELBRECHT) | | |

--- -/-

The present search report has been drawn up for all claims

| Place of search | Date of completion of the search | Examiner |
|---|---|---|
| THE HAGUE | 19-11-1986 | DECLAT M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

EP 86 30 2021

| DOCUMENTS CONSIDERED TO BE RELEVANT | | | Page 2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | US-A-3 809 287 (W.G. MULLER-SCHERAK) | | |
| A | US-A-3 752 551 (J.W. CLARK) | | |
| A | US-A-3 646 611 (H. IKEDA) | | |
| A | WO-A-8 505 724 (W. MAYER) | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 19-11-1986 | DECLAT M.G. |